# FASCICULE DE BREVET EUROPEEN

(11) **EP 1 225 326 B1**
(45) Date de publication et mention de la délivrance du brevet: **05.10.2005**
(21) Numéro de dépôt: 02290020.3
(22) Date de dépôt: 07.01.2002
(51) Int. Cl.: F02K 7/18

(54) **Système d'obturation d'un conduit, en particulier pour les voies d'air d'un statoréacteur**
Rohrverschlussvorrichtung, insbesondere für Luftrohre in einem Staustrahlantrieb
Conduit obturation system, in particular for ramjet air conduits

(30) Priorité: 12.01.2001 FR 0100383
(43) Date de publication de la demande: 24.07.2002
(73) Titulaire: Aerospatiale Matra Missiles, 75116 Paris (FR)
(72) Inventeur: Carton, Laurent, 18400 Saint-Florent sur Cher (FR)
(74) Mandataire: Bonnetat, Christian

(56) Documents cités:
- DE-A- 3 242 585
- US-A- 3 768 255
- US-A- 4 028 886
- US-A- 4 441 312
- US-A- 5 784 877

## Description

La présente invention concerne un système d'obturation pour un conduit. Bien que non exclusivement, elle concerne plus particulièrement un système d'obturation pour un orifice d'une voie d'introduction d'air dans la chambre de combustion d'un statoréacteur.

On sait que les statoréacteurs sont essentiellement constitués par une chambre de combustion, se terminant par une tuyère d'éjection et à l'intérieur de laquelle sont introduits du combustible liquide ou gazeux (pouvant être obtenu à partir d'un combustible solide) et de l'air de combustion. Cet air de combustion est introduit dans ladite chambre de combustion à travers au moins une voie d'introduction d'air, du type manche à air, qui capte de l'air lorsque ledit statoréacteur (ou le mobile aérien qui le porte) se déplace par rapport à l'air ambiant.

Ainsi, le fonctionnement d'un statoréacteur nécessite la mise en vitesse préalable dudit statoréacteur par rapport audit air ambiant.

Pour ce faire, il est usuel, dans une phase initiale de fonctionnement correspondant à la mise en vitesse dudit statoréacteur, de faire fonctionner celui-ci en fusée, grâce à un propulseur auxiliaire consommable disposé dans ladite chambre de combustion, puis, lorsque ledit statoréacteur a atteint une vitesse prédéterminée et que ledit propulseur auxiliaire est complètement consumé, on passe en fonctionnement statoréacteur proprement dit, avec injection de combustible et d'air de combustion dans la chambre de combustion.

Un tel fonctionnement bimode (mode fusée, puis mode statoréacteur) oblige à prévoir un système d'obturation pour, d'une part, obturer un orifice de ladite voie d'introduction d'air ou manche à air pendant le fonctionnement en fusée, afin d'éviter les fuites, à travers ledit orifice, des gaz engendrés par ledit propulseur auxiliaire consommable et, d'autre part, ouvrir ledit orifice de la voie d'introduction d'air ou manche à air pour le fonctionnement en statoréacteur proprement dit.

Il est connu (voir par exemple le document JP-03057867) d'utiliser comme système d'obturation une trappe basculante à ouverture commandée. Toutefois, dans ce cas, on doit généralement prévoir un système de commande particulièrement sophistiqué, évitant toute ouverture intempestive de la trappe, qui pourrait entraîner une mise à feu prématurée dudit propulseur auxiliaire consommable et, par suite, endommager le porteur (avion par exemple) d'un missile équipé dudit statoréacteur. De plus, surtout, cette trappe reste présente à bord du statoréacteur après l'ouverture de la voie d'introduction d'air, ce qui pose bien entendu des problèmes d'encombrement et entraîne la présence d'une masse parasite durant le fonctionnement statoréacteur.

Pour remédier au moins partiellement à ce dernier inconvénient, le document FR-2 474 594 décrit un système d'obturation pour un orifice d'introduction d'air de combustion dans la chambre de combustion d'un statoréacteur, qui comporte :
- un obturateur ou couvercle en verre qui obture complètement ledit orifice pendant la phase initiale ; et
- un dispositif de destruction, à savoir un dispositif de percussion mécanique, qui détruit cet obturateur en verre, avant le fonctionnement statoréacteur. Lors de cette destruction, l'obturateur en verre est décomposé en petits fragments. Comme l'orifice se trouve en aval de la manche à air et correspond à l'embouchure dans la chambre de combustion, ces fragments sont éjectés à l'extérieur, vers l'arrière, en passant par la chambre de combustion et la tuyère de poussée.

Par conséquent, l'obturateur est complètement éliminé lors du fonctionnement statoréacteur. Le document US-A-4 028 886 décrit également un tel système.

Toutefois, ce système d'obturation connu présente plusieurs inconvénients. Tout d'abord, il existe un risque d'endommagement de la chambre de combustion et de la tuyère de poussée par l'éjection des fragments de verre à travers ces dernières.

De plus, l'utilisation d'un dispositif de percussion mécanique comprenant notamment un piston et un percuteur se terminant en pointe, pose quelques problèmes. En effet :
- soit ce dispositif de percussion agit frontalement sur l'obturateur, pour pouvoir facilement le briser. Il est alors nécessaire d'agencer l'obturateur dans la voie d'introduction d'air de sorte qu'il perturbe l'écoulement d'air en fonctionnement statoréacteur ;
- soit le dispositif de percussion est agencé hors de ladite voie d'introduction d'air. Dans ce cas, il peut uniquement agir latéralement sur l'obturateur, ce qui réduit l'efficacité de ce dispositif de destruction, puisqu'il est bien plus difficile de briser le verre, et surtout de le briser complètement, à partir d'une telle position.

La présente invention a pour objet de remédier à ces inconvénients. Elle concerne un système d'obturation pour un orifice d'un conduit, en particulier pour un orifice d'une voie d'introduction d'air dans la chambre de combustion d'un statoréacteur, qui permet :
- d'ouvrir, de façon efficace et sans aucun danger, ledit orifice du conduit à un instant déterminé, et
- de libérer complètement ledit conduit après l'ouverture de l'orifice,
- tout en palliant les problèmes de masse et d'encombrement précités.

A cet effet, selon l'invention, ledit système d'obturation pour un conduit, du type comportant :
- un obturateur susceptible d'obturer complètement ledit orifice du conduit ; et
- un dispositif d'actionnement commandable, susceptible d'agir sur ledit obturateur pour libérer ledit orifice,
est remarquable en ce que ledit obturateur comporte un capot amovible qui est maintenu sur ledit conduit de manière à obturer complètement ledit orifice et un dispositif de verrouillage qui maintient ledit capot sur ledit conduit par l'intermédiaire d'au moins un mors verrouillé, qui est déverrouillable, et en ce que ledit dispositif d'actionnement comporte au moins un moyen percuteur commandable, qui est susceptible de déverrouiller ledit mors de manière à provoquer l'éjection du capot hors dudit conduit et à libérer ledit orifice.

Ainsi, comme grâce à l'invention ledit capot est éjecté hors du conduit lors du déverrouillage, le conduit est complètement libéré, cette libération étant réalisée sans aucun danger pour le conduit ou des éléments agencés dans ce dernier ou à proximité de ce dernier.

De plus, ledit système d'obturation est de réalisation simple et peu coûteuse.

En outre, comme ledit capot est amovible et est simplement maintenu sur le conduit, il n'est pas nécessaire, pour la mise en oeuvre de la présente invention, de concevoir de façon particulière ledit conduit. Par conséquent, la présente invention peut être appliquée à tout type de conduit existant.

Par ailleurs, grâce audit moyen percuteur, le déverrouillage peut être réalisé de façon très efficace, comme on le verra plus en détail ci-dessous.

De façon avantageuse, ledit moyen percuteur agit sur un piège qui est déplaçable sous l'action dudit moyen percuteur.

De plus avantageusement, ledit piège comporte un tampon élastique, pour amortir l'action dudit moyen percuteur, ce qui permet d'obtenir un choc mou sur le piège, un tel choc mou permettant de conserver la quantité de mouvement correspondante tout en protégeant le piège et les éléments mécaniques qui lui sont associés.

En outre, avantageusement, ledit dispositif de verrouillage comporte :
- au moins un moyen de serrage qui est susceptible de serrer ledit mors sur le conduit de manière à le verrouiller et qui est susceptible d'être déplacé de manière à déverrouiller ledit mors ; et/ou
- au moins une attache sous forme de boucle, qui est susceptible de coopérer avec une embase sous forme de crochet, qui est fixée sur la face externe du conduit.

Dans un mode de réalisation préféré, ledit moyen percuteur comprend :
- au moins un projectile qui est susceptible de déplacer ledit piège lorsqu'il est projeté dans ce dernier ; et
- un moyen de projection commandable, qui est susceptible de projeter ledit projectile et qui est agencé hors dudit conduit tout en étant orienté de manière à pouvoir projeter ledit projectile dans ledit piège.

Ainsi, grâce à l'invention :
- comme le moyen de projection est agencé hors du conduit, il ne gêne pas l'écoulement de l'air après l'ouverture de l'orifice (en mode statoréacteur par exemple), ledit conduit étant complètement libéré ; et
- comme le moyen percuteur comprend la projection d'un projectile, il est possible d'actionner ledit piège et ainsi d'éjecter ledit capot, malgré l'éloignement du moyen de projection et son agencement hors dudit conduit.

De plus, grâce audit piège, on récupère le projectile qui ne présente ainsi aucun danger pour des éléments ou des personnes se trouvant à proximité dudit conduit.

Pour optimiser la précision de l'impact du projectile sur le piège et donc augmenter l'efficacité du déverrouillage, de façon avantageuse, le système d'obturation conforme à l'invention comporte de plus un guide rectiligne pour guider ledit projectile, guide rectiligne qui est réalisé sous forme d'un canal, dont une extrémité est située en face dudit moyen de projection et dont l'autre extrémité est dirigée vers ledit piège.

De préférence, ledit moyen percuteur comporte un percuteur pyrotechnique. Il peut s'agir du moyen percuteur proprement dit, comme du moyen de projection.

Par ailleurs, avantageusement, ledit capot comporte une face externe qui est inclinée par rapport à une direction prédéterminée représentative d'un écoulement de fluide à l'extérieur du conduit. Ceci facilite la séparation (ou l'éjection) du capot dudit conduit, lorsque ledit capot est déverrouillé, en raison de l'action exercée par ledit écoulement de fluide sur ladite face externe inclinée.

On notera que le système d'obturation conforme à l'invention peut être mis en oeuvre sur différents types de conduits, dont l'ouverture ou la désobturation doit être réalisée en environnement opérationnel. De plus, il est en mesure de supporter des sollicitations mécaniques, thermiques, vibratoires et électromagnétiques très élevées.

Dans une application préférée, le système d'obturation conforme à l'invention est destiné à obturer un orifice d'une voie d'introduction d'air de combustion dans la chambre de combustion d'un statoréacteur, ledit statoréacteur étant de façon connue susceptible, dans une phase initiale de fonctionnement correspondant à la mise en vitesse dudit statoréacteur, de fonctionner en fusée grâce à un propulseur auxiliaire consommable disposé dans ladite chambre de combustion, puis, lorsque ledit statoréacteur atteint une vitesse prédéterminée, de fonctionner en statoréacteur proprement dit avec injection de combustible et d'air de combustion dans ladite chambre de combustion, et ledit système d'obturation comportant, de façon connue :
- au moins un obturateur susceptible d'obturer complètement ledit orifice, pendant ladite phase initiale de fonctionnement en fusée ; et
- au moins un dispositif d'actionnement commandable susceptible d'agir sur ledit obturateur de manière à ouvrir ledit orifice pour le fonctionnement en statoréacteur.

Selon l'invention, ledit système d'obturation est remarquable en ce qu'en plus des caractéristiques précitées (concernant le dispositif d'actionnement et l'obturateur), ledit obturateur obture l'orifice d'entrée dans la voie d'introduction d'air, en amont de cette dernière dans le sens d'écoulement de l'air dans ladite voie d'introduction d'air.

Ainsi, le capot est éjecté hors (et au loin) de ladite voie d'introduction d'air, sans pénétrer dans cette dernière. Par conséquent, grâce à l'invention :
- d'une part, à la différence d'une trappe basculante usuelle qui reste sur le statoréacteur après l'ouverture, on obtient une réduction avantageuse de la masse et de l'encombrement ; et
- d'autre part, à la différence d'un obturateur en verre connu dont les fragments traversent la chambre de combustion et la tuyère de poussée, il n'existe aucun risque d'endommager ledit statoréacteur.

La présente invention concerne également un statoréacteur muni d'un système d'obturation tel que précité, ainsi qu'un missile comprenant un tel statoréacteur.

Les figures du dessin annexé feront bien comprendre comment l'invention peut être réalisée. Sur ces figures, des références identiques désignent des éléments semblables.

La figure 1 montre schématiquement, en coupe longitudinale partielle, un missile équipé d'un statoréacteur de type connu, dont les voies d'introduction d'air sont pourvues d'obturateurs faisant partie de systèmes d'obturation conformes à l'invention.

La figure 2 est une vue en coupe longitudinale d'un obturateur conforme à l'invention.

Les figures 3 et 5 sont respectivement des vues en plan et en perspective d'un dispositif de verrouillage d'un système d'obturation conforme à l'invention.

La figure 4 est une coupe selon la ligne IV-IV de la figure 3.

La figure 6 montre schématiquement, en coupe longitudinale partielle, un moyen percuteur d'un système d'obturation conforme à l'invention.

Les figures 7 et 8 sont des vues en perspective d'un capot conforme à l'invention, montré respectivement de profil et de dessus.

Le missile 1 comporte un corps 3 contenant, entre autres, des appareils et charges usuels (qui ne sont pas représentés car n'étant pas impliqués par l'invention) et un réservoir de combustible 4, destiné à l'alimentation du statoréacteur 2 et fixé à la partie arrière dudit corps 3.

Le statoréacteur 2 comporte une chambre de combustion 5, se terminant à l'arrière par une tuyère d'éjection 6 et reliée, vers l'avant, à une pluralité de voies d'introduction d'air, du type manche à air 7.

Les manches à air 7 sont disposées à la périphérie du corps 3 et sont solidaires de celui-ci. Chacune d'elles, vers l'avant, comporte un orifice 8 d'entrée d'air et, vers l'arrière, débouche dans la partie avant 9 de la chambre de combustion 5 par un orifice 10 de sortie d'air de la manche 7.

Un coude 11 est prévu dans chaque manche à air 7 pour raccorder la partie de celle-ci fixée à la paroi extérieure du corps 3 à l'orifice 10 correspondant à l'entrée de la chambre de combustion 5.

Au voisinage de la partie avant 9 de la chambre de combustion 5 est prévu un dispositif 12 d'injection de combustible. Le dispositif 12 est commandé par un dispositif d'alimentation et de régulation de combustible (non représenté) porté par le corps 3 et relié au réservoir 4.

Un revêtement de protection thermique 13 est prévu sur les parois internes de la chambre de combustion 5.

Le fonctionnement du missile 1 est le suivant.

Initialement, après le largage du missile 1 de son porteur, le statoréacteur 2 n'étant pas en service, le missile 1 est mû par un propulseur auxiliaire consommable 14 (par exemple une charge de poudre) logé à l'intérieur de la chambre de combustion 5.

Quand le propulseur auxiliaire 14 est en fonctionnement, les manches à air 7 sont obturées, par des obturateurs 15 faisant partie de systèmes d'obturation 16 conformes à l'invention et précisés ci-dessous.

A la fin du fonctionnement du propulseur 14, lorsque celui-ci est complètement consumé, lesdits obturateurs 15 sont ouverts et l'air pénétrant (dans le sens indiqué par des flèches F) dans les manches à air 7 à travers les orifices 8 est amené dans la chambre de combustion 5, à travers les orifices 10.

De plus, également à la fin du fonctionnement du propulseur consommable 14, le dispositif d'alimentation et de régulation alimente le dispositif d'injection 12 en combustible et ce dernier est enflammé. Le statoréacteur entre alors en fonctionnement et prend le relais du propulseur 14 (qui a disparu) pour propulser le missile 1.

On décrit ci-après les caractéristiques conformes à l'invention pour un seul système d'obturation 16, étant entendu que ces caractéristiques existent pour tous les systèmes d'obturation 16 du statoréacteur 2.

Ledit système d'obturation 16 conforme à l'invention est du type comportant :
- ledit obturateur 15 qui obture complètement un orifice 8 de la manche à air 7 ; et
- un dispositif d'actionnement commandable 17, qui est susceptible d'agir sur ledit obturateur 15 de manière à ouvrir ledit orifice 8.

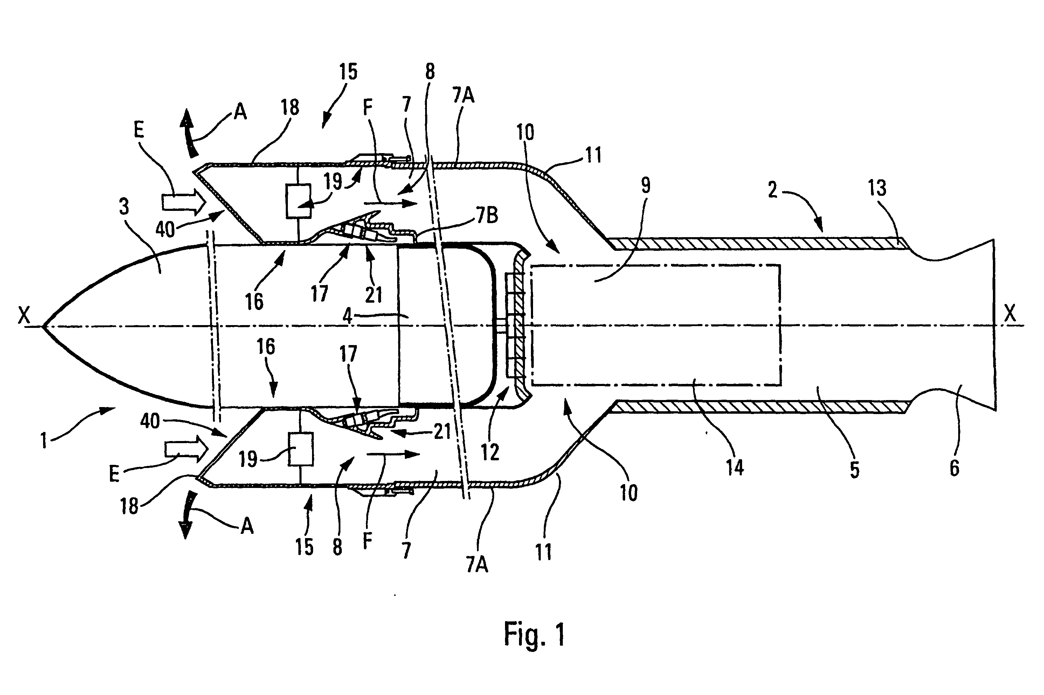

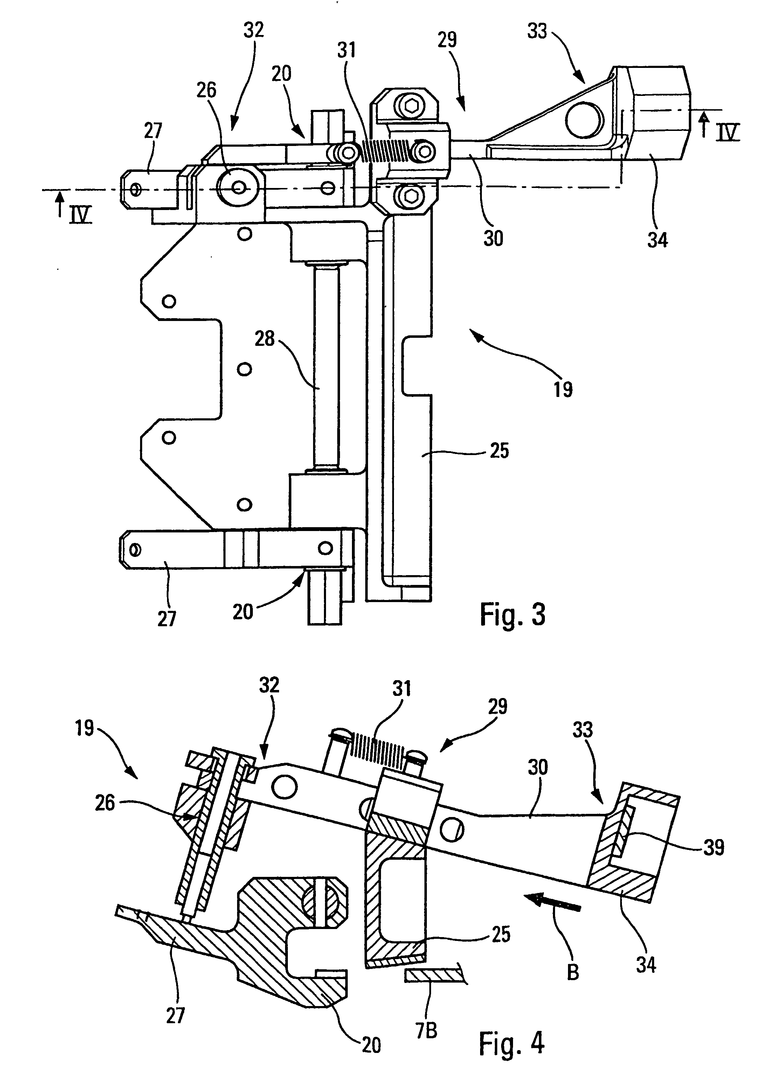

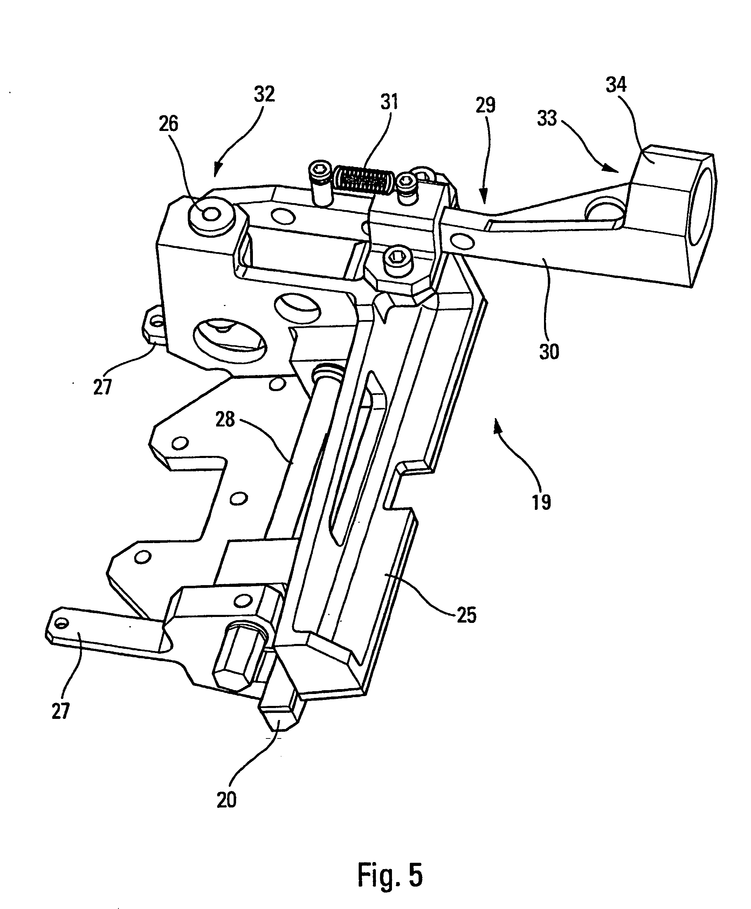

Selon l'invention, ledit système d'obturation 16 est remarquable en ce que :
- ledit obturateur 15 comporte :
   . un capot amovible 18 qui est maintenu de manière à obturer l'orifice 8 d'entrée dans la manche à air 7 (illustrée par des parois 7A et 7B), qui est situé en amont de cette dernière dans le sens F d'écoulement de l'air dans ladite manche à air 7 ; et
   . un dispositif de verrouillage 19 précisé ci-dessous, qui maintient ledit capot 18 sur ladite manche à air 7 par l'intermédiaire d'au moins un mors 20 verrouillé, qui est déverrouillable. Dans l'exemple représenté sur les figures 3 et 5, le dispositif de verrouillage 19 comporte deux mors 20 ; et
- ledit dispositif d'actionnement 17 comporte au moins un moyen percuteur 21 commandable, qui est susceptible de déverrouiller ledit mors 20 de manière à provoquer l'éjection du capot 18 hors de ladite manche à air 7, comme illustré par une flèche A sur la figure 1, et à libérer ledit orifice d'entrée 8.

Ledit système d'obturation 16 conforme à l'invention présente de nombreux avantages. En particulier :
- comme le capot 18 est complètement éjecté hors de la manche à air 7 :
   . cette dernière est complètement libérée ;
   . il n'existe aucun risque d'endommager la manche à air 7, le statoréacteur 2 ou le missile 1 ; et
   . on obtient une réduction de masse et d'encombrement importante et très avantageuse, après l'éjection ; et
- comme ledit capot 18 est amovible et est simplement maintenu sur la manche à air 7, comme on le verra plus en détail ci-dessous, il n'est pas nécessaire de concevoir ladite manche à air 7 de manière particulière au niveau de l'orifice 8. La présente invention peut par conséquent être appliquée à tout type de manche à air 7 existant.

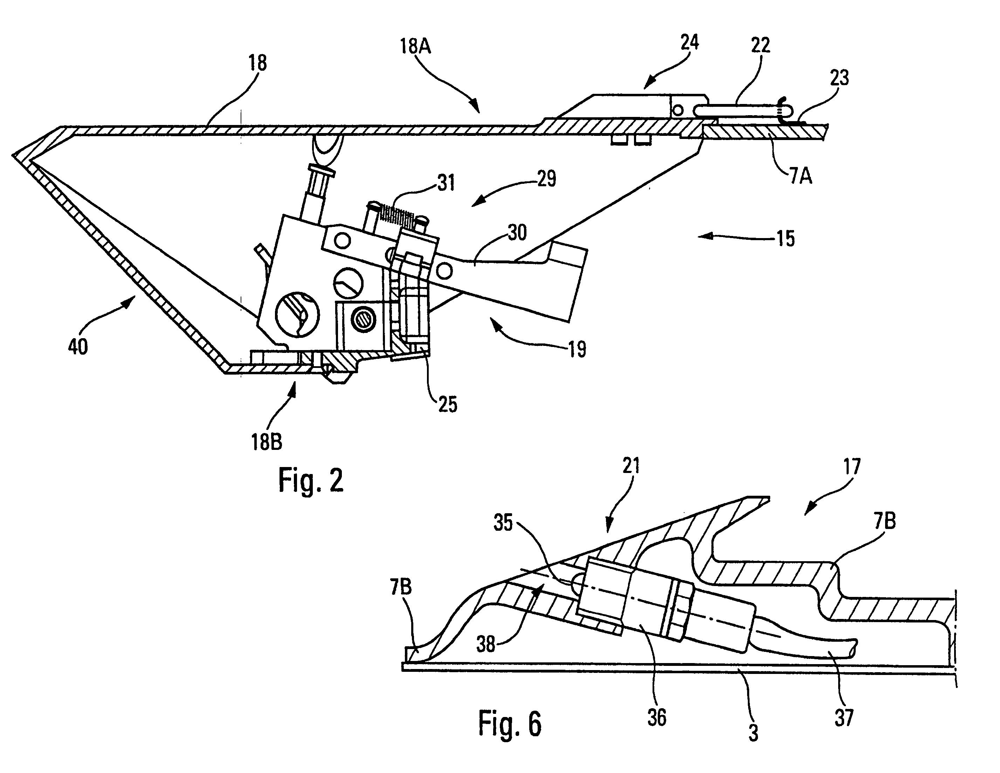

Le capot 18, qui est par exemple réalisé en aluminium, en matière composite ou en mousse durcie et qui est représenté sur la figure 2, est maintenu sur la manche à air 7 :
- d'une part, sur la face externe 18A, par l'intermédiaire d'attaches 22 sous forme de boucles, qui sont associées à des embases 23 sous forme de crochets, embases 23 qui sont fixées sur la face externe de la paroi 7A de la manche à air 7 au niveau de l'orifice 8, comme montré partiellement sur la figure 2. Ces attaches 22 sont réglables par des moyens 24 usuels, pour amener le capot 18 en appui sur la lèvre de la manche à air 7. De plus, les embases 23 sont formées de sorte que, lorsque le capot 18 est tourné d'un angle prédéterminé par rapport à la position de fixation, par exemple de 5°, les attaches 22 sont libérées desdites embases 23 ; et
- d'autre part, sur la face interne 18B, par l'intermédiaire desdits mors 20. L'extrémité de la paroi 7B de la manche à air 7 est serrée, à cet effet, entre d'une part lesdits mors 20 et, d'autre part, un support 25 du dispositif de verrouillage 19 (voir figure 4). Ce serrage est mis en oeuvre par l'intermédiaire d'une tige de serrage 26 de type usuel, prenant appui sur une languette 27 de l'un desdits mors 20, comme représenté sur les figures 3 à 5. Lesdits mors 20 qui sont solidaires l'un de l'autre peuvent tourner autour d'un axe 28.

Pour réaliser le déverrouillage desdits mors 20, c'est-à-dire pour desserrer la prise formée par les mors 20 et le support 25, afin de libérer la paroi 7B de la manche à air 7, le dispositif de verrouillage 19 comporte un mécanisme de déverrouillage 29 qui comprend une lame 30. Cette lame 30 est soumise à l'action d'un ressort de rappel 31 et est susceptible d'être déplacée dans le sens illustré par une flèche B sur la figure 4, pour agir par l'une 32 de ses extrémités sur la tige de serrage 26 afin de la débloquer. Ladite lame 30 comporte à son autre extrémité 33 un piège 34 qui est destiné à coopérer avec le moyen percuteur 21 du dispositif d'actionnement 17.

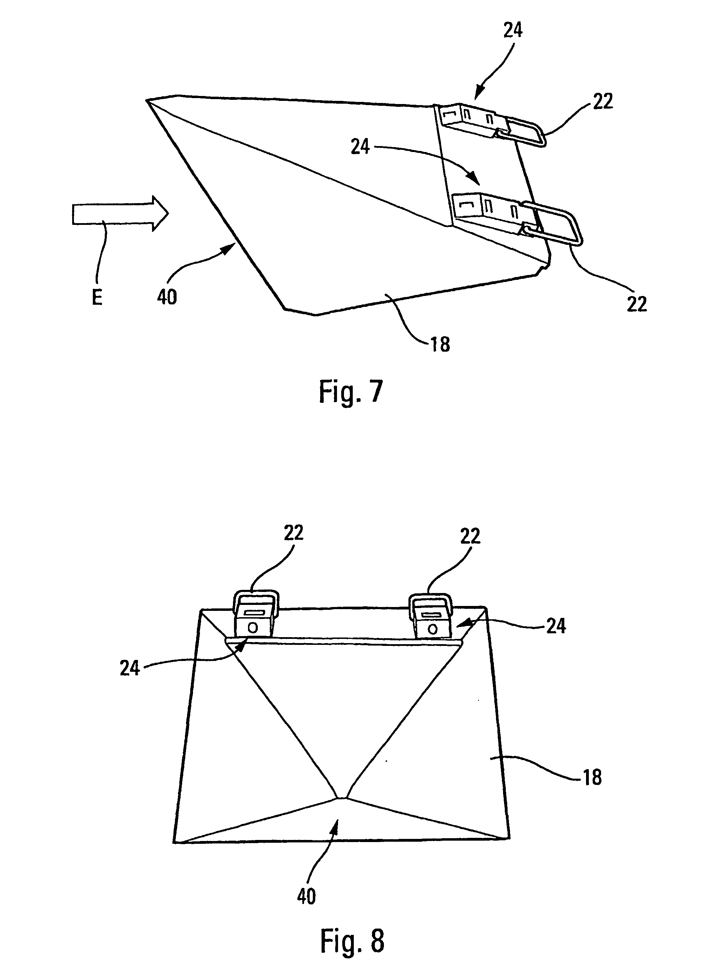

Comme on peut le voir sur la figure 6, ledit moyen percuteur 21 comprend :
- au moins un projectile 35, par exemple une bille métallique, qui est susceptible de déplacer ledit piège 34 dans le sens de la flèche B lorsqu'il est projeté dans ce dernier ; et
- un moyen de projection 36 commandable, qui est susceptible de projeter ledit projectile 35 et qui est agencé hors dudit conduit 7 tout en étant orienté de manière à pouvoir projeter ledit projectile 35 dans ledit piège 34.

Dans le mode de réalisation préféré représenté sur la figure 6, ledit moyen de projection 36 est réalisé sous forme d'un percuteur pyrotechnique usuel, dont on a représenté partiellement un cordon 37 permettant de transmettre l'ordre (de mise à feu électrique), pour commander le déclenchement dudit percuteur 36.

Ainsi, grâce à l'invention :
- comme le moyen de projection 36 est agencé hors de la manche à air 7, il ne gêne pas l'écoulement de l'air de combustion, après l'éjection du capot 18, en fonctionnement statoréacteur ; et
- comme le déverrouillage est réalisé par l'envoi d'un projectile 35, il peut être réalisé sans qu'il y ait contact entre le moyen percuteur 21 et le dispositif de verrouillage 19.

Ledit moyen percuteur 21 comporte de plus un guide rectiligne 38 pour guider le projectile 35, guide rectiligne qui est réalisé sous forme d'un canal 38, dont une extrémité est située en face dudit moyen de projection 36 et dont l'autre extrémité est dirigée vers le piège 34, ce qui permet d'optimiser la précision de la projection et donc l'efficacité du déverrouillage.

Comme percuteur pyrotechnique, on peut également utiliser un percuteur connu à vérin, ne réalisant pas de projection d'un projectile.

De plus, il est également envisageable que ledit moyen percuteur agisse directement sur les mors 20 ou par l'intermédiaire d'un mécanisme différent de celui 26, 29 présenté sur les figures 3 à 5.

Selon l'invention, ledit piège 34 comporte de plus un tampon élastique 39 représenté sur la figure 4, pour amortir le choc lors de l'impact du projectile 35 de manière à obtenir un choc "mou", ce qui permet de conserver la quantité de mouvement correspondante tout en protégeant le piège 34, ainsi que les éléments mécaniques situés à proximité dudit piège 34.

Comme on peut le voir sur les figures 1, 7 et 8, le capot 18, de forme pyramidale, présente une face 40 qui est inclinée par rapport à l'écoulement E à l'extérieur du missile 1. Grâce à la force exercée par cet écoulement E sur cette face 40, le capot 18 est éjecté au loin de la manche à air 7, dès qu'il est libéré de toute contrainte mécanique sur sa face inférieure 18B, c'est-à-dire dès que les mors 20 sont déverrouillés.

Le système d'obturation 16 conforme à l'invention et présenté ci-dessus fonctionne comme suit.

Lorsque le propulseur 14 est complètement consommé, on envoie un ordre, par l'intermédiaire du cordon 37, pour déclencher le percuteur 36. Ce dernier projette alors le projectile 35 qui pénètre dans le piège 34 du dispositif de verrouillage 19 et heurte le tampon 39 de manière à déplacer la lame 30 dans le sens de la flèche B. Ladite lame 30 débloque alors la tige de serrage 26 qui déverrouille les mors 20 de sorte que le capot 18 est libéré au niveau de sa face interne 18B. Sous l'effet de l'écoulement E, ledit capot 18 est basculé, en pivotant autour de la liaison attaches 22 / embases 23, jusqu'à ce que lesdites attaches 22 soient complètement libérées desdites embases 23. Le capot 18 est alors éjecté au loin du statoréacteur 2 et du missile 1.

En plus des avantages précités, le système d'obturation 16 conforme à l'invention est de réalisation et de fonctionnement simples et il est peu coûteux et peu encombrant, en particulier en phase statoréacteur. De plus, grâce audit piège 34, le projectile 35 n'est pas éjecté (séparément) hors du statoréacteur 2 lors du déverrouillage. Par conséquent, il n'existe pas de risque pour la sécurité de personnes ou d'objets qui se trouvent dans le proche environnement du missile 1.

Bien entendu, ledit système d'obturation 16 conforme à l'invention peut être appliqué à d'autres types de conduits, et pas seulement à des manches à air 7.

## Revendications

1. Système d'obturation pour un orifice (8) d'un conduit (7), qui comporte :
- un obturateur (15) susceptible d'obturer complètement ledit orifice (8) du conduit (7) ; et
- un dispositif d'actionnement (17) commandable, susceptible d'agir sur ledit obturateur (15) pour libérer ledit orifice (8),
**caractérisé en ce que** ledit obturateur (15) comporte un capot amovible (18) qui est maintenu sur ledit conduit (7) de manière à obturer complètement ledit orifice (8) et un dispositif de verrouillage (19) qui maintient ledit capot (18) sur ledit conduit (7) par l'intermédiaire d'au moins un mors (20) verrouillé, qui est déverrouillable, et **en ce que** ledit dispositif d'actionnement (17) comporte au moins un moyen percuteur (21) commandable, qui est susceptible de déverrouiller ledit mors (20) de manière à provoquer l'éjection du capot (18) hors dudit conduit (7) et à libérer ledit orifice (8).

2. Système d'obturation selon la revendication 1,
**caractérisé en ce que** ledit moyen percuteur (21) agit sur un piège (34) qui est déplaçable sous l'action dudit moyen percuteur (21).

3. Système d'obturation selon la revendication 2,
**caractérisé en ce que** ledit piège (34) comporte un tampon élastique (39), pour amortir l'action dudit moyen percuteur (21).

4. Système d'obturation selon l'une des revendications 1 à 3,
**caractérisé en ce que** ledit dispositif de verrouillage (19) comporte au moins un moyen de serrage (26) qui est susceptible de serrer ledit mors (20) sur le conduit (7) de manière à le verrouiller et qui est susceptible d'être déplacé de manière à déverrouiller ledit mors (20).

5. Système d'obturation selon l'une des revendications 1 à 4,
**caractérisé en ce que** ledit dispositif de verrouillage (19) comporte au moins une attache (22) sous forme de boucle, qui est susceptible de coopérer avec une embase (23) sous forme de crochet, qui est fixée sur la face externe du conduit (7).

6. Système d'obturation selon l'une des revendications 2 et 3,
**caractérisé en ce que** ledit moyen percuteur (21) comprend :
- au moins un projectile (35) qui est susceptible de déplacer ledit piège (34) lorsqu'il est projeté dans ce dernier ; et
- un moyen de projection (36) commandable, qui est susceptible de projeter ledit projectile (35) et qui est agencé hors dudit conduit (7) tout en étant orienté de manière à pouvoir projeter ledit projectile (35) dans ledit piège (34).

7. Système d'obturation selon la revendication 6,
**caractérisé en ce qu'**il comporte de plus un guide rectiligne (38) pour guider ledit projectile (35), guide rectiligne qui est réalisé sous forme d'un canal (38), dont une extrémité est située en face dudit moyen de projection (36) et dont l'autre extrémité est dirigée vers ledit piège (34).

8. Système d'obturation selon l'une quelconque des revendications précédentes,
**caractérisé en ce que** ledit moyen percuteur (21) comporte un percuteur pyrotechnique (36).

9. Système d'obturation selon l'une quelconque des revendications précédentes,
**caractérisé en ce que** ledit capot (18) comporte une face externe (40) qui est inclinée par rapport à une direction prédéterminée représentative d'un écoulement de fluide (E) à l'extérieur du conduit (7).

10. Système d'obturation selon l'une quelconque des revendications précédentes pour un orifice (8) d'une voie d'introduction d'air (7),
**caractérisé en ce que** ledit obturateur (15) obture l'orifice (8) d'entrée dans ladite voie d'introduction d'air (7), en amont de cette dernière dans le sens (F) d'écoulement de l'air dans ladite voie d'introduction d'air (7).

11. Statoréacteur (2) comportant une chambre de combustion (5), pourvue d'au moins une voie (7) pour introduire de l'air de combustion à l'intérieur de ladite chambre de combustion (5), et un système d'obturation (16) pour un orifice (8) de ladite voie d'introduction d'air de combustion (7), ledit système d'obturation (16) comportant au moins un obturateur (15) susceptible d'obturer complètement ledit orifice (8), pendant une phase initiale de fonctionnement en fusée, et au moins un dispositif d'actionnement commandable (17) susceptible d'agir sur ledit obturateur (15) de manière à ouvrir ledit orifice (8) pour un fonctionnement en statoréacteur, ledit statoréacteur (2) étant apte, dans la phase initiale de fonctionnement correspondant à la mise en vitesse dudit statoréacteur, de fonctionner en fusée grâce à un propulseur auxiliaire consommable (14) disposé dans ladite chambre de combustion (5), puis, lorsque ledit statoréacteur (2) atteint une vitesse prédéterminée, de fonctionner en statoréacteur proprement dit avec injection de combustible et d'air de combustion dans ladite chambre de combustion (5),
**caractérisé en ce que** ledit système d'obturation (16) est tel que spécifié sous l'une quelconque des revendications 1 à 10.

12. Missile,
**caractérisé en ce qu'**il comporte un statoréacteur (2) selon la revendication 11.

## Patentansprüche

1. Verschlussvorrichtung für eine Öffnung (8) eines Rohres (7), die Folgendes aufweist:
einen Verschluss (15), der geeignet ist, die Öffnung (8) des Rohres (7) vollständig zu verschließen; und
eine steuerbare Betätigungsvorrichtung (17), die geeignet ist, auf den Verschluss (15) zu wirken, um die Öffnung (8) freizumachen,
**dadurch gekennzeichnet, dass** der Verschluss (15) eine abnehmbare Abdeckung (18), die so auf dem Rohr (7) gehalten wird, dass sie die Öffnung (8) vollständig verschließt, und eine Verriegelungsvorrichtung (19), welche die Abdeckung (18) mit Hilfe von mindestens einer verriegelten Spannbacke (20), die entriegelbar ist, auf dem Rohr hält, aufweist, und dass die Betätigungsvorrichtung (17) mindestens ein steuerbares Schlagmittel (21) aufweist, das geeignet ist, die Spannbacke (20) zu entriegeln, so dass das Ausstoßen der Abdeckung (18) aus dem Rohr (7) herbeigeführt wird und die Öffnung (8) freigemacht wird.

2. Verschlussvorrichtung nach Anspruch 1,
**dadurch gekennzeichnet, dass** das Schlagmittel (21) auf eine Auffangvorrichtung (34) wirkt, die unter der Wirkung des Schlagmittels (21) verschiebbar ist.

3. Verschlussvorrichtung nach Anspruch 2,
**dadurch gekennzeichnet, dass** die Auffangvorrichtung (34) einen elastischen Dämpfer (39) aufweist, um die Wirkung des Schlagmittels (21) zu dämpfen.

4. Verschlussvorrichtung nach einem der Ansprüche 1 bis 3,
**dadurch gekennzeichnet, dass** die Verriegelungsvorrichtung (19) mindestens eine Klemmvorrichtung (26) aufweist, die geeignet ist, die Spannbacke (20) so auf das Rohr (7) zu drücken, dass sie verriegelt wird, und die geeignet ist, so bewegt zu werden, dass die Spannbacke (20) entriegelt wird.

5. Verschlussvorrichtung nach einem der Ansprüche 1 bis 4,
**dadurch gekennzeichnet, dass** die Verriegelungsvorrichtung (19) mindestens eine Befestigung (22) in Form eines Bügels aufweist, die geeignet ist, in eine Halterung (23) in Form eines Hakens eingehängt zu werden, die an der Außenseite des Rohres (7) befestigt ist.

6. Verschlussvorrichtung nach einem der Ansprüche 2 und 3,
**dadurch gekennzeichnet, dass** das Schlagmittel (21) Folgendes umfasst:
mindestens ein Projektil (35), das geeignet ist, die Auffangvorrichtung (34) zu bewegen, wenn es in sie hineingeschossen wird, und
mindestens eine steuerbare Schussvorrichtung (36), die geeignet ist, das Projektil (35) abzuschießen, und die außerhalb des Rohres (7) angeordnet ist, wobei sie so ausgerichtet ist, dass sie das Projektil (35) in die Auffangvorrichtung (34) schießen kann.

7. Verschlussvorrichtung nach Anspruch 6,
**dadurch gekennzeichnet, dass** sie ferner eine geradlinige Führung (38) zum Lenken des Projektils (35) aufweist, die als Kanal (38) ausgebildet ist, dessen eines Ende sich gegenüber der Schussvorrichtung (36) befindet, und dessen anderes Ende zur Auffangvorrichtung (34) zeigt.

8. Verschlussvorrichtung nach einem der vorhergehenden Ansprüche,
**dadurch gekennzeichnet, dass** das Schlagmittel (21) einen pyrotechnischen Schlagbolzen (36) aufweist.

9. Verschlussvorrichtung nach einem der vorhergehenden Ansprüche,
**dadurch gekennzeichnet, dass** die Abdeckung (18) eine Außenseite (40) aufweist, die in Bezug zu einer vorbestimmten Richtung, die repräsentativ für einen Fluidstrom (E) außerhalb des Rohres (7) ist, schräg steht.

10. Verschlussvorrichtung nach einem der vorhergehenden Ansprüche für eine Öffnung (8) eines Luftzuführungsrohres (7),
**dadurch gekennzeichnet, dass** der Verschluss (15) die Eintrittsöffnung (8) in das Luftzuführungsrohr (7) vor dem Luftzuführungsrohr (7) in Richtung (F) des Luftstroms in dem Luftzuführungsrohr (7) verschließt.

11. Staustrahltriebwerk (2), das eine Verbrennungskammer (5), die mit mindestens einem Rohr (7) zum Zuführen von Verbrennungsluft in das Innere der Verbrennungskammer (5) ausgestattet ist, und eine Verschlussvorrichtung (16) für eine Öffnung (8) des Zuführungsrohres für Verbrennungsluft (7) aufweist, wobei die Verschlussvorrichtung (16) mindestens einen Verschluss (15), der geeignet ist, die Öffnung (8) in einer anfänglichen Betriebsphase im Raketenantriebsmodus vollständig zu verschließen, und mindestens eine steuerbare Betätigungsvorrichtung (17), die geeignet ist, so auf den Verschluss (15) zu wirken, dass dieser die Öffnung (8) für einen Betrieb im Staustrahlantriebsmodus öffnet, aufweist, wobei das Staustrahltriebwerk (2) geeignet ist, in der anfänglichen Betriebsphase, die der Phase entspricht, in der das Staustrahltriebwerk auf eine gewisse Geschwindigkeit gebracht wird, dank einer verbrennbaren Zusatztreibladung (14), die in der Verbrennungskammer (5) angeordnet ist, im Raketenantriebsmodus zu arbeiten, und dann, wenn das Staustrahltriebwerk (2) eine vorbestimmte Geschwindigkeit erreicht, im eigentlichen Staustrahlantriebsmodus zu arbeiten, bei dem Brennstoff und Verbrennungsluft in die Verbrennungskammer (5) eingespritzt werden,
**dadurch gekennzeichnet, dass** die Verschlussvorrichtung (16) so ausgeführt ist, wie sie unter einem der Ansprüche 1 bis 10 beschrieben wird.

12. Flugkörper,
**dadurch gekennzeichnet, dass** er ein Staustrahltriebwerk (2) nach Anspruch 11 aufweist.

## Claims

1. Shut-off system for an orifice (8) of a duct (7), which comprises:
- a shutter (15) capable of completely shutting off said orifice (8) of the duct (7); and
- a controllable actuating device (17) capable of acting on said shutter (15) to uncover said orifice (8),
**characterized in that** said shutter (15) comprises a removable cap (18) which is held on said duct (7) in such a way as to completely shut off said orifice (8) and a locking device (19) which keeps said cap (18) on said duct (7) by at least one locked jaw (20), which is unlockable, and **in that** said actuating device (17) comprises at least one controllable striker means (21) which is capable of unlocking said jaw (20) in such a way as to cause the cap (18) to be ejected from said duct (7) and to uncover said orifice (8).

2. Shut-off system according to Claim 1,
**characterized in that** said striker means (21) acts on a trap (34) which can move under the action of said striker means (21).

3. Shut-off system according to Claim 2,
**characterized in that** said trap (34) comprises an elastic buffer (39) to damp the action of said striker means (21).

4. Shut-off system according to one of Claims 1 to 3,
**characterized in that** said locking device (19) comprises at least one tightening means (26) which is capable of tightening said jaw (20) onto the duct (7) so as to lock it and which is capable of being moved in such a way as to unlock said jaw (20).

5. Shut-off system according to one of Claims 1 to 4,
**characterized in that** said locking device (19) comprises at least one attachment (22) in the form of a loop, which can collaborate with a base (23) in the form of a hook, which is fixed to the outer face of the duct (7).

6. Shut-off system according to either of Claims 2 and 3,
**characterized in that** said striker means (21) comprises:
- at least one projectile (35) which is capable of moving said trap (34) when it is projected into the latter; and
- a controllable projection means (36) capable of projecting said projectile (35) and which is arranged outside said duct (7) while at the same time being oriented in such a way as to be able to project said projectile (35) into said trap (34).

7. Shut-off system according to Claim 6,
**characterized in that** it additionally comprises a straight guide (38) for guiding said projectile (35), which straight guide is produced in the form of a canal (38), one end of which faces said projection means (36) and the other end of which is directed toward said trap (34).

8. Shut-off system according to any one of the preceding claims,
**characterized in that** said striker means (21) comprises a pyrotechnic striker (36).

9. Shut-off system according to any one of the preceding claims,
**characterized in that** said cap (18) comprises an outer face (40) which is inclined with respect to a predetermined direction that represents a flow of fluid (E) outside the duct (7).

10. Shut-off system according to any one of the preceding claims, for an orifice (8) of an air inlet passage (7),
**characterized in that** said shutter (15) shuts off the inlet orifice (8) into said air inlet passage (7) upstream of the latter in the direction (F) of flow of the air in said air inlet passage (7).

11. Ramjet (2) comprising a combustion chamber (5) provided with at least one passage (7) for introducing combustion air into said combustion chamber (5), and a shut-off system (16) for an orifice (8) of said combustion-air inlet passage (7), said shut-off system (16) comprising at least one shutter (15) capable of completely shutting off said orifice (8) during an initial phase of operation as a rocket, and at least one controllable actuating device (17) capable of acting on said shutter (15) so as to open said orifice (8) for operation as a ramjet, said ramjet (2) being capable, in the initial phase of operation corresponding to said ramjet getting up to speed, of operating as a rocket by virtue of a consumable auxiliary propellant (14) arranged in said combustion chamber (5) and then, when said ramjet (2) reaches a predetermined speed, of operating as a ramjet proper with fuel and combustion air injected into said combustion chamber (5),
**characterized in that** said shut-off system (16) is as specified in any one of Claims 1 to 10.

12. Missile,
**characterized in that** it comprises a ramjet (2) according to Claim 11.
